# EUROPÄISCHE PATENTSCHRIFT

(11) **EP 3 079 895 B1**
(45) Veröffentlichungstag und Bekanntmachung des Hinweises auf die Patenterteilung: **10.04.2019**
(21) Anmeldenummer: 14808939.4
(22) Anmeldetag: 02.12.2014
(51) Int. Cl.: B31F 5/00, B65B 51/22, B65B 5/02, B23K 20/10

(54) **VERFAHREN ZUM HERSTELLEN EINER VERPACKUNG UND VERPACKUNGSMASCHINE**
METHOD FOR PRODUCING PACKAGING, AND PACKAGING MACHINE
PROCÉDÉ DE FABRICATION D'UN EMBALLAGE ET MACHINE D'EMBALLAGE

(30) Priorität: 12.12.2013 DE 102013225737
(43) Veröffentlichungstag der Anmeldung: 19.10.2016
(73) Patentinhaber: Robert Bosch GmbH, 70442 Stuttgart (DE)
(72) Erfinder: WIEDUWILT, Ulrich, 73529 Schwaebisch Gmuend (DE); VAIHINGER, Bernhard, 71384 Weinstadt (DE); CZUDAY, Roland, CH-8413 Neftenbach (CH); BAECHLE, Andreas, 79736 Rickenbach (DE)
(86) Internationale Anmeldenummer: PCT/EP2014/076276
(87) Internationale Veröffentlichungsnummer: WO 2015/086381

(56) Entgegenhaltungen:
- EP-A1- 0 014 946
- EP-A1- 0 095 628
- EP-A2- 0 390 733
- EP-A2- 1 714 875
- WO-A1-99/25547
- CH-A- 399 988
- DE-A1- 3 447 771
- DE-A1- 10 252 948
- DE-B- 1 156 303
- DE-C2- 2 812 138
- US-A- 3 533 207
- US-A- 3 652 354
- US-A- 5 697 545

## Beschreibung

### Stand der Technik

Die vorliegende Erfindung betrifft ein Verfahren zum Herstellen einer Verpackung und eine entsprechende Verpackungsmaschine. Bei dem Verfahren und in der Verpackungsmaschine wir mittels einem Ultraschallfügeverfahren Papiermaterial, insbesondere Papier, Karton oder Pappe, verbunden.

In EP 0 340 334 A2 wird eine Vorrichtung beschrieben, die sich zum Verbinden von zwei- oder mehrlagigen Papiererzeugnissen mittels Ultraschall eignet. Das verwendete Papier ist dabei mit einer thermoplastischen Beschichtung versehen. Mittels der Sonotrode werden dabei Longitudinalwellen erzeugt, so dass sich die Sonotrode bei der Ultraschallschwingung auf den Amboss zu und wieder von dem Amboss wegbewegt. Durch die entsprechende Ultraschallfrequenz und den entsprechenden Anpressdruck wird hier eine ausreichende Verdichtung der Papierlagen erzeugt. Gleichzeitig kommt es zu einer hohen Wärmeentwicklung im Mikrobereich der thermoplastischen Beschichtung und somit zum Verkleben der Papierlagen.

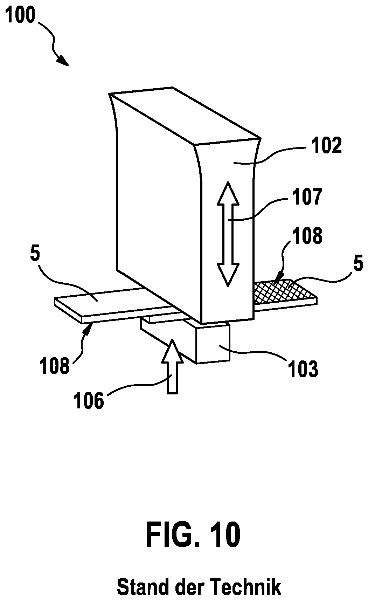

Beiliegende Figur 10 zeigt in schematisch vereinfachter Ansicht eine Ultraschallfügevorrichtung 100 nach dem Stand der Technik zum Verbinden von thermoplastisch beschichtetem Papiermaterial. Die Vorrichtung 100 umfasst eine Sonotrode 102 nach dem Stand der Technik und einen Amboss 103 nach dem Stand der Technik. Zwischen der Sonotrode 102 und dem Amboss 103 befindet sich das zu fügende Papiermaterial 5, wobei thermoplastische Schichten 108 zueinander liegen. Das Papiermaterial 5 wird in dem Spalt zwischen Sonotrode 102 und Amboss 103 mit einer Fügekraft 106 beaufschlagt. Die Sonotrode 102 führt eine Ultraschallschwingung mit einer Schwingungsrichtung 107 aus. In der Vorrichtung 100 nach dem Stand der Technik sind die Schwingungsrichtung 107 und die Richtung der Fügekraft 106 parallel zueinander ausgerichtet. Es wird hier also die longitudinale Bewegungsrichtung der Sonotrode 102 für den Fügeprozess genutzt.

Aus der US 3533207 wird zunächst aus einem Zuschnitt eine entsprechende Verpackung geformt. Überlappende Bereiche des Zuschnitts werden daraufhin gefügt. Bei der WO 99/25547 A1 handelt es sich um eine großflächige bzw. endlose Verbindung zweier Papiermaterialien. Das Endlos-Material wird hier befeuchtet und über die entsprechenden Rollen übereinandergelegt. In einem endlosen Verfahren erfolgt die Ultraschallfügung. Der Erfindung liegt die Aufgabe zugrunde, ein besseres Fügen von Papiermaterial zu ermöglichen. Diese Aufgabe wird gelöst durch die Merkmale der unabhängigen Ansprüche.

### Offenbarung der Erfindung

Beim dem erfindungsgemäßen Verfahren und der erfindungsgemäßen Vorrichtung erfolgt ein Ultraschallschweißen mit einer Befeuchtung der Fügestellen. Dies ermöglicht ein festes und sauberes Fügen des Papiermaterials, ohne Klebstoff oder thermoplastischer Beschichtungen. Diese Vorteile werden erreicht durch ein Verfahren zum Herstellen einer Verpackung aus Papiermaterial. Das Papiermaterial besteht insbesondere aus Papier, Karton oder Pappe. Insbesondere kann hier Wellpappe verwendet werden. Das Verfahren umfasst folgende Schritte: (i) Formen einer Verpackung aus einem Zuschnitt aus Papiermaterial, wobei das Papiermaterial an zumindest einer Fügestelle überlappt. (ii) Positionieren der zumindest einen Fügestelle zwischen einer Sonotrode und einem Amboss. (iii) Beaufschlagen der Fügestelle mit einer Fügekraft in einer definierten Fügekraftrichtung. (iv) Versetzen der Sonotrode in eine Ultraschallschwingung zum Ultraschallschweißen des Papiermaterials an der Fügestelle. Erfindungsgemäß ist vorgesehen, dass das Papiermaterial, vorzugsweise an Innenseiten von Fügestellen, vor dem Formen der Verpackung und/oder während dem Formen der Verpackung und/oder nach dem Formen der Verpackung und/der während des Ultraschallreibschweißens, befeuchtet wird. Das Befeuchten erfolgt vorzugsweise mit flüssigem Wasser und/oder Wasserdampf und/oder einem Befeuchtungsmittel oder ähnlichem. Besonders bevorzugt wird reines Wasser ohne Zusätze verwendet. Es wird angenommen, dass durch das Ultraschallschweißen an den Fügestellen die Papierstruktur leicht zerstört wird und sich so ein lokaler Papierbrei bildet. Dieser Papierbrei ermöglicht infolge der Einwirkung des Ultraschalls und des Drucks durch die Fügekraft eine Verfilzung und somit eine Art Verleimung der Papierfasern, analog zur Papierherstellung. Eine Art Verdichtung der Fügeflächen führt zur Ausbildung von Wasserstoffbrücken. Dies wird vielmals auch als Verfilzung beschrieben. Die lokale Ausbildung von Wasserstoffbrücken kann durch das Befeuchten aktiv unterstützt werden. Insbesondere in der Verpackungsindustrie kommen zahlreiche Arten von Klebeverbindungen von Kartonagen mit Hilfe von Dispersionsklebstoffen (Kaltleim) und Schmelzklebstoffen (Heißleim) zum Einsatz. Um den Verpackungsprozess zu rationalisieren, sauberer und hygienischer zu gestalten, kann das Ultraschallschweißverfahren gemäß vorliegender Erfindung mit befeuchteten Fügestellen eingesetzt werden. Durch die kurzen Zyklen im Bereich von 0,1 bis 1 Sekunde und Haltezeiten von 0,1 bis 2 Sekunden ist das erfindungsgemäße Verfahren besonders für den Einsatz in der Serienproduktion für hohe Stückzahlen geeignet. Gegenüber dem Klebeverfahren hat das erfindungsgemäße Verfahren die folgenden Vorteile: Es wird erfindungsgemäß kein Fügematerial benötigt, so dass Heiß- bzw. Kaltleim substituiert werden kann. Das Papiermaterial benötigt für den Fügevorgang mittels Ultraschall keine zusätzliche thermoplastische Beschichtung. Herkömmliche Klebemaschinen neigen stark zum Verschmutzen. Da beim erfindungsgemäße Verfahren bevorzugt keine Zusatzstoffe verwendet werden, mit Ausnahme der bevorzugten Anwendung von Wasser zur Befeuchtung, kann eine Verringerung der Verschmutzung und somit das Einhalten der hygienischen Standards, die für die Lebensmittel- und Pharmaindustrie von hoher Bedeutung sind, erzielt werden. Daraus ergibt sich auch, dass beim erfindungsgemäßen Verfahren nicht die Gefahr einer Migration von Fügemittel (Leim) in das Packgut besteht. Des Weiteren ergibt sich eine hohe Energieeinsparung, da kein kontinuierliches Aufheizen des Heißleims notwendig ist. Die für das Verfahren notwendige Energie wird nur im Bereich der Fügezeit, also im Millisekundenbereich, benötigt. Die von der Sonotrode erzeugte Ultraschallschwingung weist eine bestimmte Schwingungsrichtung auf. Gleichzeitig mit dem Aufbringen der Ultraschallschwingung über die Sonotrode wird das Papiermaterial im Spalt zwischen der Sonotrode und dem gegenüberliegenden Amboss mit einer Fügekraft beaufschlagt. Diese Fügekraft ist in einer Fügekraftrichtung ausgerichtet. In einer erfinungsgemäßen Variante ist vorgesehen, dass die Schwingungsrichtung und die Fügekraftrichtung nicht parallel zueinander ausgerichtet sind. Im Stand der Technik ist stets die Schwingungsrichtung der Sonotrode parallel zur Fügekraftrichtung ausgebildet. Dadurch wird im Stand der Technik hauptsächlich die longitudinale Bewegungsrichtung der schwingenden Teilchen für die Energieerzeugung in der Fügenaht genutzt. Dabei wird die Wärmeenergie aus Innermolekularer- und Grenzflächenreibung der Fügepartner erzeugt. Die Wärmeenergie der Grenzflächenreibung wird dabei aus der Verformungsenergie der Deformation des Fügematerials über die Ambossgeometrie gewonnen. Dem gegenüber wurde im Rahmen der Erfindung erkannt, dass ein sehr viel besseres Fügen von Papiermaterial möglich ist, wenn ein Reibschweißverfahren eingesetzt wird, bei dem in erster Linie die Grenzflächenreibung genutzt wird. Das bevorzugt verwendete Ultraschallreibschweißen weist gegenüber dem Ultraschalllongitudinalschweißen, bei dem die Fügekraftrichtung parallel zur Schwingungsrichtung der Sonotrode ausgerichtet ist, diverse Vorteile auf: Beim Ultraschallreibschweißen können Materialien mit geringer Schalldämpfung verwendet werden, was insbesondere bei Papiermaterial der Fall ist. Infolge der Reibbewegung der gefügten Papiermaterialien ist keine Lärmemission, wie durch die hämmernden Bewegungen der Sonotrode bei longitudinalen Ultraschallschweißverfahren, feststellbar. Die Scher- und Schälfestigkeit der Fügeverbindung ist beim Ultraschallreibschweißen deutlich höher als bei Fügeverbindungen, die mit üblichen Ultraschallfügeverfahren erzeugt wurden. Ein weiterer entscheidender Vorteil bei dem Ultraschallreibschweißen ist, dass für den Energieeintrag in das Papiermaterial die gesamte Schwingung, und nicht nur die Amplitude, die in Richtung der Fügestelle wirkt, genutzt wird. Infolge der Vermeidung einer hämmernden Bewegung auf das zu fügende Papiermaterial, wird dieses Papiermaterial beim Durchführen des Ultraschallreibschweißens geschont.

Die Unteransprüche zeigen bevorzugte Weiterbildungen der Erfindung.

Insbesondere ist vorgesehen, dass die Fügekraftrichtung zur Schwingungsrichtung beim Ultraschallreibschweißen senkrecht bzw. rechtwinklig steht. Abweichungen von ±10° werden hier noch als senkrecht angesehen. Durch diese Ausrichtung wird sichergestellt, dass die Amplituden der schwingenden Sonotrode in beiden Richtungen weitestgehend auf das Papiermaterial wirken. Gleichzeitig sorgt die senkrechte Ausrichtung der Fügekraftrichtung zur Schwingungsrichtung für eine annähernd ausschließliche Nutzung der Grenzflächenreibung an den Fügestellen.

Die Ultraschallschwingungsfrequenz der Sonotrode liegt vorzugsweise bei 20 bis 40 kHz, besonders vorzugsweise zwischen 30 und 35 kHz. Des Weiteren ist bevorzugt vorgesehen, dass die Ultraschallschwingungsamplitude der Sonotrode vorzugsweise zwischen 10 und 50 µm, besonders vorzugsweise zwischen 20 und 40 µm, liegt. Insbesondere bei diesen Parametern für die Ultraschallschwingung entsteht eine für das Fügen des Papiermaterials günstige Grenzflächenreibung an den Fügestellen.

Das erfindungsgemäße Anwenden des Ultraschallschweißens bei Papiermaterial mit Befeuchtung führt zu sehr stabilen Fügestellen, so dass bevorzugt auf die Verwendung von Klebstoff oder thermoplastischen Beschichtungen verzichtet wird. Des Weiteren ist es auch nicht notwendig, dass sich an den Fügestellen Druckerfarbe auf dem Papiermaterial befindet, die ähnlich einer thermoplastischen Beschichtung ein Verkleben der Papiermaterialien begünstigen würde.

Vorzugsweise wird für mehrere, voneinander beabstandete Fügestellen ein gemeinsamer Amboss und/oder eine gemeinsame Sonotrode verwendet. Dadurch ist es möglich, mit nur einem Amboss und/oder mit nur einer Sonotrode mehrere Fügestellen gleichzeitig zu fügen. Insbesondere werden parallele Fügestellen gleichzeitig von einem Amboss und/oder einer Sonotrode bearbeitet.

Die Erfindung umfasst des Weiteren eine Verpackungsvorrichtung zum Herstellen einer Verpackung aus Papiermaterial gemäß den Merkmalen des Anspruchs 6. Die Verpackungsvorrichtung umfasst eine Formeinheit. Diese ist vorzugsweise ausgebildet als Tiefzieheinheit. Die Formeinheit dient zum Formen der Verpackung aus einem Zuschnitt aus Papiermaterial. Das Papiermaterial wird dabei so geformt, dass es an zumindest einer Fügestelle überlappt. Ferner ist zumindest eine in Ultraschallschwingung versetzbare Sonotrode zum Ultraschallschweißen des Papiermaterials vorgesehen. Des Weiteren ist zumindest ein Amboss als Gegenwerkzeug für die Sonotrode vorgesehen. Die Fügekraft wird erzeugt durch ein Beaufschlagen der Sonotrode und/oder des Ambosses mit einer entsprechenden Kraft. Die Fügekraft wirkt dabei in einer Fügekraftrichtung. Erfindungsgemäß ist vorgesehen, dass das Papiermaterial, vorzugsweise an Innenseiten von Fügestellen, vor dem Formen der Verpackung und/oder während dem Formen der Verpackung und/oder nach dem Formen der Verpackung und/der während des Ultraschallreibschweißens, mittels einer Befeuchtungsvorrichtung befeuchtet wird. Das Befeuchten erfolgt vorzugsweise mit flüssigem Wasser und/oder Wasserdampf und/oder einem Befeuchtungsmittel oder ähnlichem. Besonders bevorzugt wird reines Wasser ohne Zusätze verwendet.

Die im Rahmen des erfindungsgemäßen Verfahrens vorgestellten Unteransprüche und vorteilhaften Ausbildungen finden entsprechend vorteilhafte Anwendung auf die erfindungsgemäße Verpackungsvorrichtung.

Insbesondere ist vorgesehen, dass die Formeinheit eine verfahrbare Stempelplatte zum Formen der Verpackung umfasst. Auf dieser Stempelplatte ist zumindest ein Amboss oder zumindest eine Sonotrode angeordnet. In besonders bevorzugter Ausführung ist vorgesehen, dass auf der Stempelplatte zumindest ein Amboss vorgesehen ist. Die zumindest eine Sonotrode befindet sich sodann außerhalb der Formeinheit. Somit wird der zumindest eine Amboss zusammen mit der Stempelplatte auf und ab bewegt. Beim Fügen der Fügestellen befindet sich der Amboss innerhalb der geformten Verpackung. Die Sonotrode setzt außen an der Verpackung an.

Des Weiteren ist bevorzugt eine Zuführeinheit vorgesehen. Diese dient zum Zuführen des Zuschnitts zur Formeinheit. Wie bereits beschrieben, erfolgt bevorzugt ein Befeuchten der Fügestellen. Dies erfolgt besonders bevorzugt in der Zuführeinheit. Die Zuführeinheit umfasst deshalb bevorzugt die Vorrichtung zum Befeuchten der Fügestellen während dem Zuführen.

Des Weiteren umfasst die Verpackungsvorrichtung bevorzugt ein Faltwerkzeug. Mit diesem Faltwerkzeug können Teile des Zuschnitts gefaltet werden, so dass sich beispielsweise Laschen des Zuschnitts überlappen. Diese überlappenden Laschen bilden dann die Fügestellen. Die Sonotrode ist vorzugsweise in das Faltwerkzeug integriert.

### Kurze Beschreibung der Zeichnungen

Nachfolgend wird ein Ausführungsbeispiel der Erfindung unter Bezugnahme auf die begleitende Zeichnung im Detail beschrieben. Dabei zeigen:
- Figur 1: ein schematisch vereinfachtes Detail einer erfindungsgemäßen Verpackungsvorrichtung zur Durchführung des erfindungsgemäßen Verfahrens gemäß einem Ausführungsbeispiel;
- Figur 2: eine Detailansicht zu Figur 1;
- Figur 3: eine Gegenüberstellung von Ultraschalllongitudinalschweißen und Ultraschallreibschweißen;
- Figur 4: ein Diagramm zur Zugfestigkeit der erzeugten Fügestelle,
- Figur 5: die erfindungsgemäße Verpackungsvorrichtung zur Durchführung des erfindungsgemäßen Verfahrens gemäß dem Ausführungsbeispiel,
- Figur 6: eine fertige Verpackung, wie sie mit der erfindungsgemäßen Verpackungsvorrichtung gemäß dem Ausführungsbeispiel herstellbar ist,
- Figur 7: einen Zuschnitt, der in der erfindungsgemäßen Verpackungsvorrichtung zur Verpackung gefaltet wird,
- Figur 8: mehrere Darstellungen des Faltprozesses, wie er von der erfindungsgemäßen Verpackungsvorrichtung gemäß dem Ausführungsbeispiel durchgeführt wird,
- Figur 9: eine Detailansicht zu Figur 5, und
- Figur 10: eine Ultraschallfügevorrichtung gemäß dem Stand der Technik.

### Ausführungsform der Erfindung

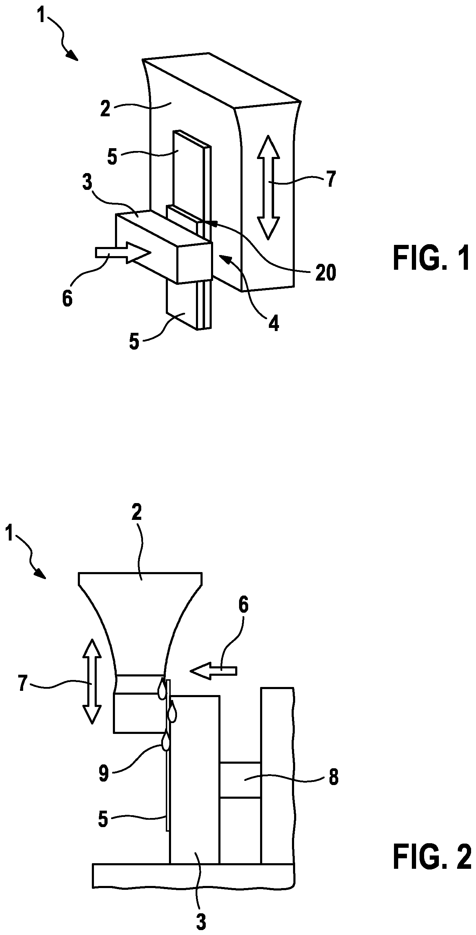

Figur 1 zeigt in stark schematisch vereinfachter Ansicht ein Detail einer Verpackungsvorrichtung 1 nach dem Ausführungsbeispiel. Mit dieser Verpackungsvorrichtung 1 kann das erfindungsgemäße Verfahren durchgeführt werden.

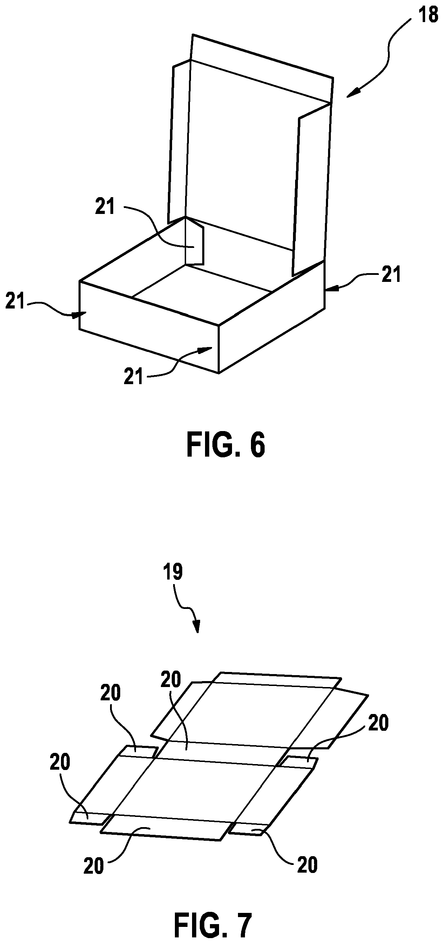

Die Verpackungsvorrichtung 1 umfasst eine Sonotrode 2 und einen Amboss 3. Zwischen der Sonotrode 2 und dem Amboss 3 ist ein Spalt 4 ausgebildet. In diesem Spalt 4 befindet sich das zu fügende Papiermaterial 5. Gezeigt sind zwei Laschen 20 einer Verpackung 18 (s. Figuren 6 und 7), die innerhalb des Spaltes 4 überlappen. Diese beiden Laschen 20 werden mittels der Verpackungsvorrichtung 1 miteinander verbunden.

Über den Amboss 3 wirkt eine Fügekraft auf das Papiermaterial 5 im Spalt 4. Diese Fügekraft ist in einer Fügekraftrichtung 6 ausgerichtet.

Die Sonotrode 2 wird zur Durchführung einer Ultraschallschwingung in Schwingungsrichtung 7 angeregt. Diese Schwingungsrichtung 7 entspricht der Ausdehnungsrichtung der Amplituden der Ultraschallschwingung.

Wie Figur 1 gut zu entnehmen ist, steht die Fügekraftrichtung 6 senkrecht auf (auch: rechtwinklig zu) der Schwingungsrichtung 7. Somit handelt es sich hier um ein Ultraschallreibschweißverfahren. Wie bereits beschrieben, kann auch ein Ultraschalllongitudinalschweißen durchgeführt werde. Dabei sind dann die Fügekraftrichtung 6 und die Schwingungsrichtung 7 parallel zueinander.

Figur 2 zeigt eine Detailansicht zu Figur 1, ebenfalls schematisch vereinfacht. Gemäß Figur 2 wird der Amboss 3 über eine Zylinderstange 8 beaufschlagt, so dass der Amboss 3 die Fügekraft auf das Papiermaterial 5 im Spalt 4 ausüben kann. Dementsprechend ist auch die Zylinderstange 8 parallel zur Fügekraftrichtung 6 angeordnet.

Des Weiteren zeigt Figur 2 schematisch stark vereinfacht die Möglichkeit, das Papiermaterial 5 mit Wasser 9 zu befeuchten. Wie bereits beschrieben, begünstigt dieses Befeuchten den Fügeprozess.

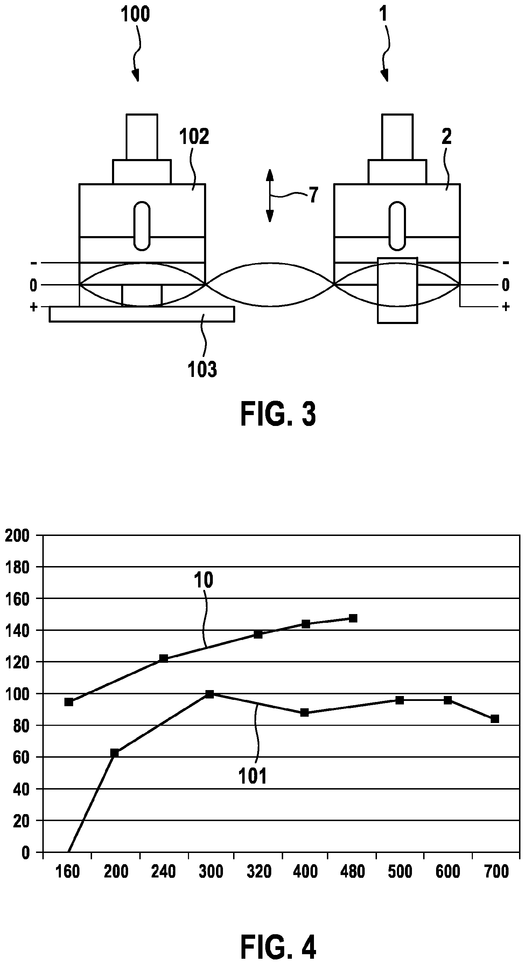

Figur 3 zeigt auf der linken Seite das Prinzip des Ultraschalllongitudinalschweißens. Die Amplitude der Ultraschallschwingung ist zur Verdeutlichung des Funktionsprinzips nicht maßstäblich dargestellt. Die Amplitude beträgt beispielsweise zwischen 20 und 40 µm. Auf der rechten Seite in Figur 3 ist das Prinzip des Ultraschallreibschweißens dargestellt. Man erkennt in dieser Darstellung, dass beim Ultraschalllongitudinalschweißen nur die untere, positive Amplitude in Richtung des Papiermaterials 5 eine Wirkung entfalten kann. Bei dem Ultraschallreibschweißen dagegen erfolgt, wie in den Figuren 1 und 2 gezeigt, eine seitliche Anpressung des Papiermaterials 5 an die Sonotrode. Infolgedessen können beide Amplitudenrichtungen, also die Ausdehnung in der positiven Amplitudenrichtung und das Zusammen- oder Zurückziehen in der negativen Amplitudenrichtung, effektiv für den Fügeprozess genutzt werden. Durch die Befeuchtung der Fügestellen kann allerdings sowohl mit dem Ultraschallreibschweißens als auch mit dem Ultraschalllongitudinalschweißen ein gutes Ergebnis erzielt werden.

Figur 4 zeigt in einem Diagramm die Versuchsergebnisse, bei denen ein Karton mit 300 g/m² in einer Vorrichtung 100 nach dem Stand der Technik und mit einer Verpackungsvorrichtung 1 gemäß der Erfindung getestet wurde. Auf der horizontalen Achse ist die aufgebrachte Fügekraft in [N] eingezeichnet. Die vertikale Achse zeigt die erzeugte Zugfestigkeit in [N/15 mm] der Fügestelle. Ein oberer Verlauf 10 zeigt das Ergebnis des erfindungsgemäßen Verfahrens mit befeuchteten Fügestellen und Ultraschallreibschweißen. Ein unterer Verlauf 101 zeigt das Ergebnis bei Verwendung der Vorrichtung 100 nach dem Stand der Technik.

Im Rahmen der Erfindung und in experimentellen Untersuchungen hat sich gezeigt, dass sich Papier, Karton und Pappe besser miteinander verbinden lassen, wenn ein Ultraschallreibschweißen als Fügeverfahren verwendet wird. Im Gegensatz zum Ultraschalllongitudinalschweißen ist dabei die Schwingungsrichtung 7 nicht parallel zur Fügekraftrichtung 6, sondern bevorzugt senkrecht (auch: rechtwinklig) dazu. Die Festigkeitswerte der Verbindung sind im Bezug auf die Scher- und Schälfestigkeit gegenüber den longitudinalen Ultraschallschweißverfahren deutlich erhöht. Zudem sind, wie Figur 4 zeigt, auch im Bereich von niedrigen Fügekräften relativ hohe Zugfestigkeiten zu erreichen.

Aufgrund von durchgeführten Versuchen wird angenommen, dass für die Verbindung mit relativ hoher Zugfestigkeit nicht nur die Mikroverspleißung der Fasern und neue Wasserstoffbrücken ausschlaggebend sind. Die Ergebnisse sprechen für ein Plastifizieren und Erstarren von fasereigenen Polymeren, natürlichen oder synthetischen Bindemitteln sowie polymerartigen Additiven. Man kann davon ausgehen, dass sich während des Fügeprozesses auf den sich berührenden Oberflächen plastifizierte Bereiche befinden. Der longitudinale Ultraschallfügevorgang beansprucht die Fügepartner mit einer erhöhten Tiefenwirkung. Für eine Verbesserung der Verbindungsqualität ist es zielführender, die mechanische Beanspruchung parallel zur Fügeebene wirken zu lassen, wie dies im Rahmen vorliegender Erfindung gezeigt wurde. Ein weiterer wesentlicher Vorteil, der für die seitliche Anpressung der Sonotrode 2 an das Papiermaterial 5 spricht, ist die vollständige Nutzung der Sonotrodenschwingungen in beide Amplitudenrichtungen. Beim Ultraschallreibschweißen wird von der im Schwingungsgebilde erzeugten stehenden Welle sowohl die Expansions- als auch die Kontraktionsbewegung genutzt. Wird die Sonotrode beim longitudinalen Ultraschallschweißen gegen die Fügepartner gepresst, wirkt sich nur die Expansion auf den Schweißvorgang aus, bei der Kontraktion verliert die Sonotrode den Kontakt zum Papiermaterial. Somit kann bei dem Ultraschallreibschweißen eine Verdopplung der wirksamen Amplitude erreicht werden, von beispielsweise 24 µm auf 48 µm bei 30 kHz.

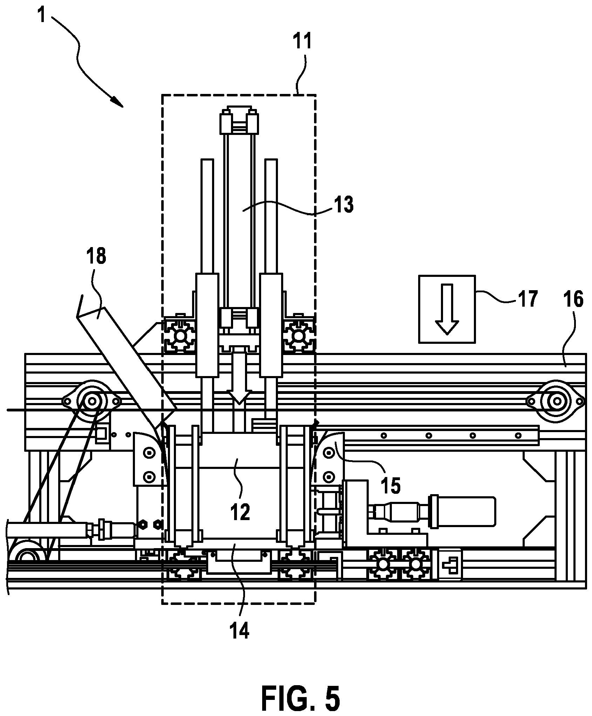

Figur 5 zeigt die genaue Ausbildung der Verpackungsvorrichtung 1 gemäß dem Ausführungsbeispiel. Gemäß dieser Darstellung umfasst die Verpackungsvorrichtung 1 eine Formeinheit 11, ausgebildet als Tiefzieheinheit. Diese Formeinheit 11 umfasst eine Stempelplatte 12. Die Stempelplatte 12 ist mittels eines Zylinders 13 in vertikaler Richtung verfahrbar. Der Zylinder 13 ist beispielsweise als Pneumatik- oder Hydraulikzylinder ausgebildet.
Unterhalb der Stempelplatte 12 befindet sich ein Führungswagen 14 der Verpackungsvorrichtung 1. Mit diesem Führungswagen 14 ist ein Faltwerkzeug 15 positionierbar.

Des Weiteren umfasst die Verpackungsvorrichtung 1 eine Zuführeinheit 16. Über diese Zuführeinheit 16 wird ein Zuschnitt 19 (s. Figur 7) in die Formeinheit 11 befördert.

Die Zuführeinheit 16 umfasst eine Befeuchtungsvorrichtung 17. Mittels dieser Befeuchtungsvorrichtung 17 werden die Fügestellen 21 (s. Figur 6) befeuchtet.

Des Weiteren zeigt Figur 5 die fertige Verpackung 18, ausgebildet als Schachtel. Im Detail ist diese Verpackung 18 in Figur 6 dargestellt. Gemäß Figur 6 weist die Verpackung 18 an ihren Kanten Fügestellen 21 auf. Diese Fügestellen 21 werden mittels der Sonotrode 2 und dem Amboss 3 gefügt.

Figur 7 zeigt den Zuschnitt 19, aus dem in der Formeinheit 11 die Verpackung 18 geformt wird. Der Zuschnitt 19 besteht aus Papiermaterial 5, beispielsweise Wellpappe. Am Zuschnitt 19 sind mehrere Laschen 20 vorgesehen. Mittels der Formeinheit 11 und dem Faltwerkzeug 15 werden diese Laschen 20 in Überlappung gebracht, so dass die Fügestellen 21 entstehen.

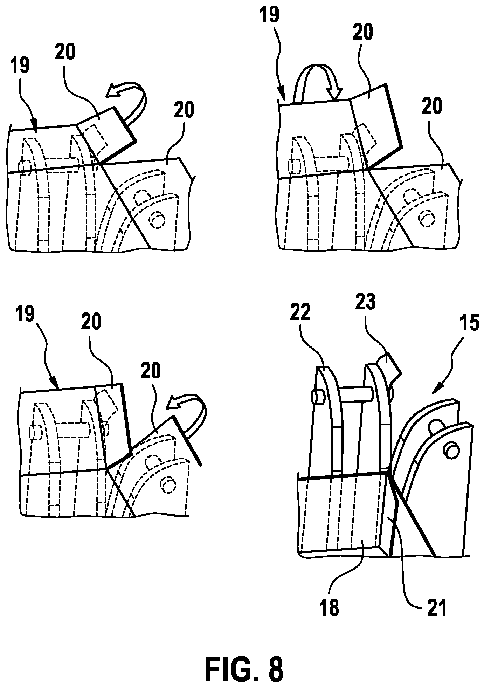

Figur 8 zeigt in mehreren Darstellungen den Faltprozess, der vom Faltwerkzeug 15 durchgeführt wird. Die Stempelplatte 12 der Formeinheit 11 ist hier der Übersichtlichkeit halber ausgeblendet. Wie Figur 8 zeigt, wird an jeder Fügestelle 21 zunächst eine erste Lasche 20 geklappt. Daraufhin wird eine zweite Lasche 20 geklappt, so dass die beiden Laschen 20 überlappen und somit eine Fügestelle 21 entsteht. Dieses Falten bzw. Klappen der Laschen 20 erfolgt mittels Formschultern 22 und Blechen 23 am Faltwerkzeug 15.

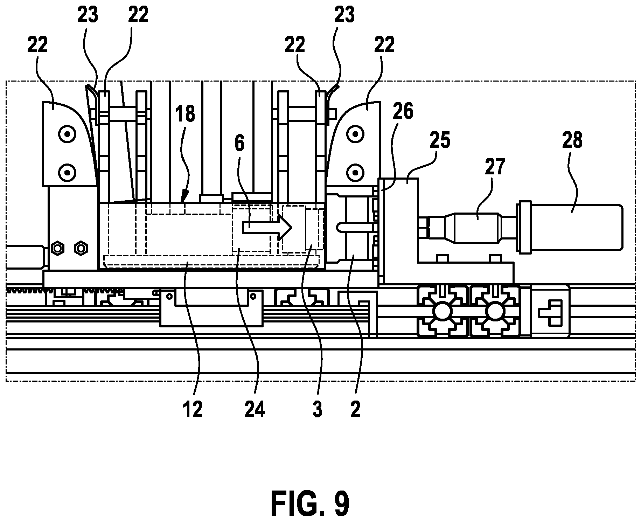

Figur 9 zeigt eine Detailansicht zu Figur 5. Figur 9 ist zu entnehmen, dass sich auf der Stempelplatte 12 zumindest ein Amboss 3 befindet. Dieser Amboss 3 wird über einen Kurzhubzylinder 24 bewegt. Dieser Kurzhubzylinder 24 befindet sich ebenfalls auf der Stempelplatte 12. In der schematisch vereinfachten Darstellung gemäß Figur 2 ist dieser Kurzhubzylinder 24 lediglich als Zylinderstange 8 dargestellt.

Außerhalb der Verpackung 18 befindet sich die Sonotrode 2. Ferner ist ein Niederhalter 26 vorgesehen. Dieser Niederhalter 26 wird über einen Sonotrodenhalter 25 gegen die Sonotrode 2 gedrückt. Diese Bewegung des Sonotrodenhalters 25 erfolgt über einen Booster 27 und einen Konverter 28. Durch den Kurzhubzylinder 24 und den Sonotrodenhalter 25 können Sonotrode 2 und Amboss 3 aufeinander zubewegt werden. Zwischen Sonotrode 2 und Amboss 3 befindet sich die Fügestelle 21 der Verpackung 18. Die Bewegungen des Kurzhubzylinders 24 und des Sonotrodenhalters 25 erzeugen somit die Fügekraft in Fügekraftrichtung 6. In diesem gezeigten Beispiel ist die Fügekraftrichtung 6 horizontal ausgerichtet. Zum Fügen der Fügestelle 21 wird die Sonotrode 2 in der eingezeichneten Schwingungsrichtung 7, also senkrecht zur Fügekraftrichtung 6, in Schwingung versetzt.

Alternativ ist auch vorgesehen, dass für ein Ultraschalllongitudinalschweißen die Schwingungsrichtung 7 und die Fügekraftrichtung 6 parallel zueinander ausgerichtet sind

Figur 9 zeigt des Weiteren, dass sowohl das Faltwerkzeug 15 als auch die Sonotrode 2 mit Sonotrodenhalter 25 in einem Werkzeug integriert sind.

## Patentansprüche

1. Verfahren zum Herstellen einer Verpackung (18) aus Papiermaterial (5), insbesondere Papier, Karton oder Pappe, umfassend die folgenden Schritte:
- Formen einer Verpackung (18) aus einem Zuschnitt (19) aus Papiermaterial (5), wobei das Papiermaterial an zumindest einer Fügestelle (21) überlappt,
- Positionieren der zumindest einen Fügestelle (21) zwischen einer Sonotrode (2) und einem Amboss (3),
- Beaufschlagen der Fügestelle (21) mit einer Fügekraft in einer Fügekraftrichtung (6), und
- Versetzen der Sonotrode (2) in eine Ultraschallschwingung zum Ultraschallschweißen des Papiermaterials (5) an der Fügestelle (21),
**dadurch gekennzeichnet,**
- **dass** das Papiermaterial (5), vorzugsweise an Innenseiten der Fügestellen (21), vor dem Formen der Verpackung (18) und/oder während dem Formen der Verpackung (18) und/oder nach dem Formen der Verpackung (18) und/oder während dem Ultraschallschweißen befeuchtet wird und
- **dass** ein Ultraschallreibschweißen durchgeführt wird, bei dem die Fügekraftrichtung (6) zur Schwingungsrichtung (7) der Ultraschallschwingung nicht parallel ist.

2. Verfahren nach Anspruch 1, **dadurch gekennzeichnet, dass** die Fügekraftrichtung (6) zur Schwingungsrichtung (7), mit einer maximalen Abweichung von +/- 10°, senkrecht steht.

3. Verfahren nach einem der vorhergehenden Ansprüche, **dadurch gekennzeichnet, dass** die Ultraschallschwingungsfrequenz der Sonotrode (2) zwischen 20 und 40 kHz, vorzugsweise zwischen 30 und 35 kHz, liegt.

4. Verfahren nach einem der vorhergehenden Ansprüche, **dadurch gekennzeichnet, dass** zum Ultraschallschweißen des Papiermaterials (5) kein Klebstoff, kein Thermoplast und vorzugsweise auch keine Druckfarbe, verwendet wird.

5. Verfahren nach einem der vorhergehenden Ansprüche, **dadurch gekennzeichnet, dass** für mehrere, voneinander beabstandete Fügestellen (21) ein gemeinsamer Amboss (3) und/oder eine gemeinsame Sonotrode (2) verwendet wird.

6. Verpackungsvorrichtung (1) zum Herstellen ein Verpackung (18) aus Papiermaterial (5), insbesondere Papier, Karton oder Pappe, umfassend
- eine Formeinheit (11), vorzugsweise ausgebildet als Tiefzieheinheit, zum Formen einer Verpackung (18) aus einem Zuschnitt (19) aus Papiermaterial (5), wobei das Papiermaterial (5) an zumindest einer Fügestelle (21) überlappt,
- zumindest eine in Ultraschallschwingung versetzbare Sonotrode (2) zum Ultraschallschweißen des Papiermaterials (5) an der Fügestelle (21), und
- zumindest einen Amboss (3),
- wobei an der zumindest einen Fügestelle (21) zwischen Sonotrode (2) und Amboss (3) durch Beaufschlagen der Sonotrode (2) und/oder des Ambosses (3) eine Fügekraft auf das Papiermaterial (5) in einer Fügekraftrichtung (6) wirkt,
**dadurch gekennzeichnet,**
- **dass** das Papiermaterial (5), vorzugsweise an Innenseiten der Fügestellen (21), vor dem Formen der Verpackung (18) und/oder während dem Formen der Verpackung (18) und/oder nach dem Formen der Verpackung (18) und/oder während dem Ultraschallschweißen mittels einer Befeuchtungsvorrichtung (17) befeuchtet wird und
- **dass** Sonotrode (2) und Amboss (3) für ein Ultraschallreibschweißen angeordnet und eingerichtet sind, bei dem die Fügekraftrichtung (6) zur Schwingungsrichtung (7) der Ultraschallschwingung nicht parallel ist.

7. Verpackungsvorrichtung nach Anspruch 6, **dadurch gekennzeichnet, dass** die Formeinheit (11) eine verfahrbare Stempelplatte (12) zum Formen der Verpackung (18) umfasst, wobei auf der Stempelplatte (12) zumindest ein Amboss (3) oder zumindest eine Sonotrode (2) angeordnet sind.

8. Verpackungsvorrichtung nach einem der Ansprüche 6 oder 7,
**gekennzeichnet durch** eine Zuführeinheit (16) zum Zuführen des Zuschnitts (19) zur Formeinheit (11), wobei die Zuführeinheit (16) die Befeuchtungsvorrichtung (17) zum Befeuchten der Fügestellen (21) während dem Zuführen umfasst.

9. Verpackungsvorrichtung nach einem der Ansprüche 6 bis 8,
**gekennzeichnet durch** ein Faltwerkzeug (15) zum Überlappen des Papiermaterials (5) an den Fügestellen (21), wobei zumindest eine Sonotrode (2) oder zumindest ein Amboss (3) in das Faltwerkzeug (15) integriert sind.

## Claims

1. Method for producing an item of packaging (18) from paper material (5), in particular paper, cardboard, or paperboard, said method comprising the following steps:
- forming an item of packaging (18) from a blank (19) of paper material (5), wherein the paper material overlaps at at least one joint (21);
- positioning the at least one joint (21) between a sonotrode (2) and an anvil (3);
- impinging the joint (21) with a joining force in a joining-force direction (6); and
- setting the sonotrode (2) in ultrasonic oscillation for the ultrasonic welding of the paper material (5) at the joint (21),
**characterized in that**
- the paper material (5), preferably on internal sides of the joints (21), is moistened prior to forming the item of packaging (18) and/or during the forming of the item of packaging (18) and/or after the forming of the item of packaging (18) and/or during the ultrasonic welding; and
- ultrasonic friction welding in which the joining-force direction (6) is not parallel with the oscillation direction (7) of the ultrasonic oscillation is carried out.

2. Method according to Claim 1, **characterized in that** the joining-force direction (6) is perpendicular to the oscillation direction (7), with a maximum deviation of +/- 10°.

3. Method according to one of the preceding claims, **characterized in that** the ultrasonic oscillation frequency of the sonotrode (2) is between 20 and 40 kHz, preferably between 30 and 35 kHz.

4. Method according to one of the preceding claims, **characterized in that** no adhesive, no thermoplastic material, and preferably also no printing ink, is used for the ultrasonic welding of the paper material (5).

5. Method according to one of the preceding claims, **characterized in that** a common anvil (3) and/or a common sonotrode (2) are/is used for a plurality of mutually spaced-apart joints (21).

6. Packaging device (1) for producing an item of packaging (18) from paper material (5), in particular paper, cardboard, or paperboard, said packaging device (1) comprising:
- a forming unit (11), preferably configured as a deep-drawing unit, for forming an item of packaging (18) from a blank (19) of paper material (5), wherein the paper material (5) overlaps at at least one joint (21);
- at least one sonotrode (2), capable of being set in ultrasonic oscillation, for the ultrasonic welding of the paper material (5) at the joint (21); and
- at least one anvil (3);
- wherein by impinging the sonotrode (2) and/or the anvil (3) a joining force acts in a joining-force direction (6) on the paper material (5) at the at least on joint (21) between the sonotrode (2) and the anvil (3);
**characterized in that**
- the paper material (5), preferably on internal sides of the joints (21), by means of a moisturizing device (17) is moistened prior to forming the item of packaging (18) and/or during the forming of the item of packaging (18) and/or after the forming of the item of packaging (18) and/or during the ultrasonic welding; and
- the sonotrode (2) and the anvil (3) are disposed and specified for ultrasonic friction welding in which the joining-force direction (6) is not parallel with the oscillation direction (7) of the ultrasonic oscillation.

7. Packaging device according to Claim 6, **characterized in that** the forming unit (11) comprises a repositionable die plate (12) for forming the item of packaging (18), wherein at least one anvil (3) or at least one sonotrode (2) is disposed on the die plate (12).

8. Packaging device according to one of Claims 6 or 7, **characterized by** a feeding unit (16) for feeding the blank (19) to the forming unit (11), wherein the feeding unit (16) comprises the moisturizing device (17) for moisturizing the joints (21) during the feeding.

9. Packaging device according to one of Claims 6 to 8, **characterized by** a folding tool (15) for overlapping the paper material (5) at the joints (21), wherein at least one sonotrode (2) or at least one anvil (3) is integrated in the folding tool (15).

## Revendications

1. Procédé de fabrication d'un emballage (18) à partir d'un matériau de papier (5), en particulier de papier, de carton ou de cartonnage, comprenant les étapes suivantes:
- former un emballage (18) à partir d'un flan (19) en matériau de papier (5), dans lequel le matériau de papier se chevauche en au moins un point de jonction (21),
- positionner ledit au moins un point de jonction (21) entre une sonotrode (2) et une enclume (3),
- appliquer au point de jonction (21) une force de jonction dans une direction de force de jonction (6), et
- mettre la sonotrode (2) en vibration ultrasonique pour le soudage par ultrasons du matériau de papier (5) au point de jonction (21),
**caractérisé en ce que**
- on humidifie le matériau de papier (5), de préférence sur des côtés intérieurs des points de jonction (21), avant le formage de l'emballage (18) et/ou pendant le formage de l'emballage (18) et/ou après le formage de l'emballage (18) et/ou pendant le soudage par ultrasons et
- on exécute un soudage par friction par ultrasons, dans lequel la direction de la force de jonction (6) n'est pas parallèle à la direction de vibration (7) de la vibration ultrasonique.

2. Procédé selon la revendication 1, **caractérisé en ce que** la direction de la force de jonction (6) est perpendiculaire à la direction de vibration (7), avec un écart maximal de ± 10°.

3. Procédé selon l'une quelconque des revendications précédentes, **caractérisé en ce que** la fréquence de vibration ultrasonique de la sonotrode (2) se situe entre 20 et 40 kHz, de préférence entre 30 et 35 kHz.

4. Procédé selon l'une quelconque des revendications précédentes, **caractérisé en ce que** l'on n'utilise pas de colle, pas de thermoplastique et de préférence aussi pas d'encre d'imprimerie pour le soudage par ultrasons du matériau de papier (5).

5. Procédé selon l'une quelconque des revendications précédentes, **caractérisé en ce que** l'on utilise pour plusieurs points de jonction (21) espacés l'un de l'autre une enclume commune (3) et/ou une sonotrode commune (2).

6. Dispositif d'emballage (1) pour la fabrication d'un emballage (18) à partir d'un matériau de papier (5), en particulier de papier, de carton ou de cartonnage, comprenant
- une unité de formage (11), constituée en particulier par une unité d'emboutissage, pour le formage d'un emballage (18) à partir d'un flan (19) en matériau de papier (5), dans laquelle le matériau de papier (5) se chevauche en au moins un point de jonction (21),
- au moins une sonotrode (2) pouvant être mise en vibration ultrasonique pour le soudage par ultrasons du matériau de papier (5) au point de jonction (21), et
- au moins une enclume (3),
- dans lequel une force de jonction agit sur le matériau de papier (5) dans une direction de force de jonction (6) audit au moins un point de jonction (21) entre la sonotrode (2) et l'enclume (3) par application à la sonotrode (2) et/ou à l'enclume (3),
**caractérisé en ce que**
- le matériau de papier (5) est humidifié, de préférence sur des côtés intérieurs des points de jonction (21), avant le formage de l'emballage (18) et/ou pendant le formage de l'emballage (18) et/ou après le formage de l'emballage (18) et/ou pendant le soudage par ultrasons au moyen d'un dispositif d'humidification (17) et
- la sonotrode (2) et l'enclume (3) sont disposées et conçues pour un soudage par friction par ultrasons, dans lequel la direction de la force de jonction (6) n'est pas parallèle à la direction de vibration (7) de la vibration ultrasonique.

7. Dispositif d'emballage selon la revendication 6, **caractérisé en ce que** l'unité de formage (11) comprend une plaque de poinçon déplaçable (12) pour former l'emballage (18), dans lequel au moins une enclume (3) et/ou au moins une sonotrode (2) sont disposées sur la plaque de poinçon (12).

8. Dispositif d'emballage selon une des revendications 6 ou 7, **caractérisé par** une unité d'alimentation (16) pour amener le flan (19) à l'unité de formage (11), dans lequel l'unité d'alimentation (16) comprend le dispositif d'humidification (17) destiné à humidifier les points de jonction (21) pendant l'alimentation.

9. Dispositif d'emballage selon l'une quelconque des revendications 6 à 8, **caractérisé par** un outil de pliage (15) pour faire chevaucher le matériau de papier (5) aux points de jonction (21), dans lequel au moins une sonotrode (2) ou au moins une enclume (3) est intégrée dans l'outil de pliage (15).
